# DEMANDE DE BREVET EUROPEEN

(11) **EP 1 655 170 A1**
(43) Date de publication de la demande: **10.05.2006**
(21) Numéro de dépôt: 05292342.2
(22) Date de dépôt: 04.11.2005
(51) Int. Cl.: B60P 3/22, B62D 53/06

(54) **Citerne semi-remorque à centre de gravité abaissé**

(30) Priorité: 04.11.2004 FR 0411765
(71) Demandeur: Etablissements MAGYAR, 21000 Dijon (FR)
(72) Inventeur: Magyar, Georges, 21000 Dijon (FR)
(74) Mandataire: Breese Derambure Majerowicz

(57) **Abrégé**

La présente invention concerne une citerne semi-remorque présentant à sa partie avant au moins deux zones (2,3) tronconiques, la zone la plus avancée (2) étant moins évasées que les zones suivantes.

## Description

La présente invention concerne une citerne semi-remorque autoportante.

De telles citernes semi-remorque présentent à leur partie avant une platine d'accouplement avec un véhicule tracteur. I1 est connu de prévoir à l'avant un tronçon conique permettant d'optimiser le raccordement avec le châssis du véhicule tracteur avec la partie cylindrique déterminée pour maximiser la contenance. Le brevet allemand DE4006810 décrit une telle citerne.

Le but de la présente invention est d'abaisser encore le centre de gravité et la hauteur de la citerne, à contenance donnée.

A cet effet, l'invention concerne selon son acception la plus générale une citerne semi-remorque présentant à sa partie avant au moins deux zones tronconiques. De préférence, la zone la plus avancée est moins évasée que les zones suivantes.

De préférence, la zone tronconique la plus avancée présente une platine d'attelage.

Avantageusement, les zones tronconiques présentent des sections dont le rayon de courbure de la partie inférieure (ou « ventrale ») est plus petit que le rayon de courbure de la partie supérieure (ou « dorsale »).

Selon un mode de réalisation préféré, la configuration des zones tronconiques est déterminée pour être complémentaire de l'enveloppe de la partie arrière du véhicule tracteur.

L'invention sera mieux comprise à la lecture de la description qui va suivre d'un mode de réalisation donné uniquement à titre d'exemple non limitatif en référence aux dessins annexés, sur lesquels :

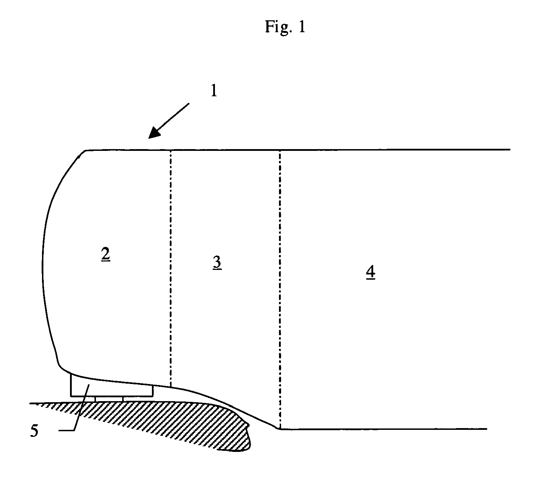

la figure 1 représente schématiquement en coupe transversale verticale une citerne selon l'invention.

La figure 1 représente une vue en coupe d'une citerne selon l'invention.

La citerne présente à sa partie avant (1) une succession de tronçons (2, 3) dont la section augmente. Le dernier tronçon (3) débouche dans une partie tubulaire (4) formant la partie principale du corps de citerne. Le tronçon (2) est muni à sa partie inférieure d'un berceau (5) équipé des moyens d'accouplement avec le véhicule tracteur.

## Revendications

1. Citerne semi-remorque présentant à sa partie avant au moins deux zones tronconiques (2, 3).

2. Citerne semi-remorque selon la revendication 1, **caractérisée en ce que** la zone la plus avancée (2) est moins évasée que les zones suivantes (3).

3. Citerne semi-remorque selon la revendication 1 ou 2, **caractérisée en ce que** la zone tronconique (2) la plus avancée présente une platine d'attelage (5).

4. Citerne semi-remorque selon la revendication 1 ou 2, **caractérisée en ce que** les zones tronconiques (2, 3) présentent des sections dont le rayon de courbure de la partie inférieure est plus petit que le rayon de courbure de la partie supérieure.

5. Citerne semi-remorque selon la revendication 1 ou 2, **caractérisée en ce que** la configuration des zones tronconiques est déterminée pour être complémentaire de l'enveloppe de la partie arrière du véhicule tracteur.
